(19) Europäisches Patentamt / European Patent Office / Office européen des brevets

(11) **EP 1 843 184 B1**

(12) **EUROPÄISCHE PATENTSCHRIFT**

(45) Veröffentlichungstag und Bekanntmachung des Hinweises auf die Patenterteilung:
**13.05.2009 Patentblatt 2009/20**

(51) Int Cl.:
*G02B 7/182* (2006.01)    *G21K 1/06* (2006.01)

(21) Anmeldenummer: **07006116.3**

(22) Anmeldetag: **24.03.2007**

(54) **Vorrichtung und Verfahren zum Justieren eines Röntgenspiegels**

Device and method for adjusting an x-ray mirror

Dispositif et procédé destinés à l'ajustement d'un miroir pour rayons-x

(84) Benannte Vertragsstaaten:
**AT BE BG CH CY CZ DK EE ES FI FR GB GR HU IE IS IT LI LT LU LV MC MT NL PL PT RO SE SI SK TR**

(30) Priorität: **05.04.2006 DE 102006015933**

(43) Veröffentlichungstag der Anmeldung:
**10.10.2007 Patentblatt 2007/41**

(73) Patentinhaber: **Incoatec GmbH**
**21502 Geesthacht (DE)**

(72) Erfinder:
- **Wings, Gerd**
  **89443 Schwennigen (DE)**
- **Hoffmann, Christian**
  **21502 Geesthacht (DE)**
- **Wulf, Klaus**
  **21522 Hohnstorf (DE)**
- **Michaelsen, Carsten**
  **21502 Geesthacht (DE)**

(74) Vertreter: **Kohler Schmid Möbus**
**Patentanwälte**
**Ruppmannstrasse 27**
**70565 Stuttgart (DE)**

(56) Entgegenhaltungen:
**JP-A- 9 269 455        US-A1- 2002 080 916**

- **SHLEIFER M ET AL: "MANUALLY AND REMOTELY OPERATED ULTRA-HIGH-VACUUM DOUBLE-AXIS MIRROR MANIPULATORS FOR THE INFRARED BEAMLINE AT THE NSLS" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, Bd. A266, Nr. 1 / 3, 1. April 1988 (1988-04-01), Seiten 402-403, XP000140051 ISSN: 0168-9002**

## Beschreibung

Die Erfindung betrifft eine Vorrichtung zum Justieren von optischen Elementen, für die Röntgenanalyse, mit einer Haltevorrichtung zur Aufnahme des optischen Elements und mit mindestens zwei Verstelleinheiten, wobei die Verstelleinheiten je einen Stößel umfassen. Darüber hinaus betrifft die Erfindung ein Verfahren zum Justieren eines optischen Elements.

Eine derartige Vorrichtung ist beispielsweise aus dem Manual "Confocal Max-Flux Optics™" der Firma Osmic Inc. bekannt.

Optische Elemente, insbesondere Röntgenspiegel, dienen in der Röntgenanalytik zur Monochromatisierung, Ausrichtung oder Bündelung der Röntgenstrahlen auf dem Weg von der Röntgenquelle zur Probe und weiter von der Probe zum Detektor.

Seit einigen Jahren werden zur Strahlkonditionierung in Labor-Röntgenanalysegeräten wie z.B. Röntgendiffraktometern Multischicht-Röntgenspiegel eingesetzt, in denen sie die Leistungsfähigkeit der Röntgeninstrumente erheblich steigern können. Spiegel der genannten Art sind bekannt z.B. aus DE 198 33 524 und US 6,041,099. Diese Spiegel sind meist parabolisch bzw. elliptisch geformt, wodurch der ungerichtet aus Laborröntgenquellen austretende Röntgenstrahl in einen parallelen bzw. einen fokussierten Strahl umgewandelt wird. Zur Erhöhung der Reflektivität sind die Spiegel mit Multischichten belegt, wie sie mit Beschichtungsverfahren hergestellt werden können. Um optimale Reflektivität zu erhalten, müssen die Dicken der Multischichten entlang der Spiegel entsprechend einer Rechenvorschrift variieren. In Röntgenspiegeln, wie sie aus DE 44 07 278 bekannt sind, müssen beispielsweise die Schichtperioden (Summe zweier Einzelschichten) vom quellnahen zum quellfernen Ende des Spiegels von ca. 4 nm bis ca. 5 nm zunehmen. Bei Verwendung von typischen Röntgenquellen, mit charakteristischen Röntgenenergien zwischen 5 keV bis 20 keV, ergeben sich entsprechend der Braggbeziehung (λ = Wellenlänge, d = Schichtperiode)

$$\lambda = 2d \sin \theta \qquad\qquad (1)$$

Braggwinkel θ von typisch 0.4 - 2 Grad. Bei Verwendung von Multischichtspiegeln ist die Bragggleichung (1) nur eine Näherung, und in DE 198 33 524 ist eine gegenüber (1) genauere Formel angegeben. Demnach werden die Spiegel unter kleinen Einfallswinkeln, also unter streifendem Einfallswinkel betrieben. Je nach Wahl der verwendeten Materialien in den Multischichten haben die Braggpeaks Breiten im Bereich 0.25 - 2 mrad, also im Bereich einiger Hundertstel Grad (volle Breite bei halbem Maximum, d.h. eine Variation dieser Größe führt bereits zu einem 50 %igem Verlust an Intensität). Die verwendeten Röntgenquellen haben Quellgrößen von typisch einigen 10 bis einigen 100 Mikrometern.

Um die Röntgenoptik optimal auf die Quelle auszurichten, sind daher sehr enge Toleranzen einzuhalten. Aus den oben genannten Gründen führen Fehljustierungen von wenigen Mikrometern und einigen tausendstel Winkelgraden bereits zu signifikanten Reflektivitäts- und Intensitätsverlusten. Temperaturänderungen von wenigen Grad können die Optik durch Wäremausdehnung bereits dejustieren. Bereits eine Änderung der Röhrenleistung kann durch die damit verbundene Temperaturänderung und damit verbundene Positionsänderung des Röhrenfokus eine Dejustierung der Optik zur Folge haben. Neben der Justierung der Optik relativ zur Röntgenquelle muss der Strahl auch noch auf die zu vermessende Probe ausgerichtet werden. Daher ergibt sich eine ganze Reihe von Freiheitsgraden (die Zahl der Freiheitsgrade ist abhängig von der Art der Optik und der Applikation), die für den optimalen Betrieb bei der Feinjustierung berücksichtigt werden müssen. Bei der Verwendung von Drehanoden-Röntgenquellen kommt erschwerend hinzu, dass das Röhrenfilament nach einigen Monaten des Betriebes verbraucht ist und gewechselt werden muss. Nach solch einem Filamentwechsel muss die Optik neu justiert werden. Generell muss auch bei einem Wechsel der Röntgenröhre die Optik neu justiert werden.

Die üblichen, von der Industrie angebotenen Justiervorrichtungen verwenden meist eine Zahl von Feingewindeschrauben, um die Optik entsprechend den notwendigen Freiheitsgraden zu justieren.

Aus US 5,303,035 ist beispielsweise bekannt, mittels manuell bedienbarer Justierschrauben eine geneigte Fläche unter einer Stellkugel hinwegzubewegen und die dadurch resultierende Lageänderung der Kugel auf das zu justierende optische Element zu übertragen.

US 5,410,206 beschreibt einen piezoelektrischen Antrieb für Verstellschrauben zur Justierung optischer Elemente.

JP 09269455 offenbart eine Justiervorrichtung für einen Spiegel mit exzentrischen Verstellvorrichtungen, auf deren Außenfläche der Spiegel angeordnet ist, wobei die Verstellringe mittels eines Schrittmotors angetrieben werden können.

US 5,410,206 beschreibt einen piezoelektrischen Antrieb für Verstellschrauben zur Justierung optischer Elemente.

Bei der im Manual "Confocal Max-Flux Optics™" der Firma Osmic Inc gezeigte Justiervorrichtung für Röntgenspiegel sind die zu justierenden. Röntgenspiegel in einer Haltevorrichtung fixiert. Die Verstellelemente sind an eine feste Position gebunden. Jede Änderung der Platzverhältnisse erfordert eine aufwändige Anpassung des Umfeldes oder Umkonstruktion der optischen Elemente. Die optischen Elemente werden lateral verstellt, indem Feingewindegetriebe von außen auf den Spiegel, bzw. dessen Halterung wirken. Die Bewegung wird indirekt über Gestänge oder Stößel von der Gehäuseaußenseite übertragen. Bauartbedingt ragen die Verstellelemente seitlich aus dem Gerätegehäuse heraus. Werden motorische Antriebe eingesetzt, wird der seitliche Platzbedarf meist deutlich erhöht. In den Röntgenanalyse-Anlagen ist jedoch ein beschränkter Einbauraum die Regel. Oft ist die optimale Positionierung aus wirtschaftlichen oder konstruktiven Gründen nicht möglich, so dass ungünstige Kompromisse in Kauf genommen werden müssen.

Da die Röntgenstrahlen nur in einem sehr kleinen Winkelbereich auf der Spiegelfläche reflektieren, müssen die Spiegel sowohl zum Ausgleich von Fertigungs- und Montagetoleranzen, als auch zum Justieren der Röntgenstrahlen auf die Probe, bzw. den Detektor sehr feinfühlig ausgerichtet werden können. Aufgrund der engen Toleranzen ist die mechanische Justierung selbst für den erfahrenen Fachmann oft schwierig und in der Regel zeitaufwendig. Der Endnutzer ist häufig überfordert, diese Justierung durchzuführen. Da die heutige Röntgenanalytik aus Strahlenschutzgründen in zunehmender Zahl so genannte Vollschutzgeräte anbietet, bei denen nicht am offenen Röntgenstrahl justiert werden kann, erfordert die Justierung der Optik nach dem Stand der Technik einen extrem aufwendigen, iterativen Prozess, der ein Öffnen des Schutzgehäuses, Drehen an einer der Justierschrauben, Schließen des Schutzgehäuses, Messen der Intensität, Öffnen des Schutzgehäuses, Drehen an einer Justierschraube, und so weiter umfasst, und dies für jeden von typisch vier Feiheitsgraden.

Die oben genannten Justierprobleme schränken die Akzeptanz des Kunden und damit den möglichen wirtschaftlichen Nutzen von Röntgenspiegeln und ähnlich komplex zu justierenden optischen Elementen in der Röntgenanalyse erheblich ein.

Es ist daher Aufgabe der Erfindung, eine Vorrichtung der eingangs genannten Art vorzuschlagen, die auf der einen Seite kompakt ausgeführt und flexibel einsetzbar ist, und auf der anderen Seite die Justierung des optischen Elements erheblich vereinfacht.

Diese Aufgabe wird erfindungsgemäß durch eine Vorrichtung mit den Merkmalen des Patentanspruchs 1 gelöst. Bei der erfindungsgemäßen Vorrichtung umfasst jede Verstelleinheit einen drehbar gelagerten Stellring mit einer exzentrischen Ausnehmung (Innenbohrung). Das optische Element ist erfindungsgemäß über die Stößel mit den Innenflächen der Stellringe mechanisch gekoppelt.

Die erfindungsgemäße Justiervorrichtung erlaubt ein mehrachsiges Justieren von optischen Elementen für die Röntgenanalytik, wobei die Verstellung des optischen Elements dadurch realisiert wird, dass vorzugsweise nahe jedem längsseitigen Enden der Haltevorrichtung, also zum Beispiel der Spiegeleingangs- und Ausgangsseite, von der Rückseite der Haltevorrichtung je ein verstellbarer Stößel die Haltevorrichtung in die gewünschte Position drückt. Das seitliche Verschieben des optischen Elements erfolgt durch Drehen des jeweiligen exzentrischen Stellringes, auf dessen Innenfläche (Fläche der exzentrischen Ausnehmung) die dem optischen Element abgewandten Enden der Stößel aufliegen.

Besonders vorteilhaft an dieser Lösung ist, dass die Lage des Angriffspunktes zum Verdrehen an jeder Stelle des Stellringes liegen darf, also auf dem Umkreis von 360° frei gewählt werden kann. Eine weitere, für die Flexibilität sehr wichtige Eigenschaft ist, dass auch das innen liegende optische Element in jedem beliebigen Winkel zwischen 0° und 360° eingebaut werden kann.

Darüber hinaus weisen die Verstellelemente der erfindungsgemäßen Justiervorrichtung gegenüber bekannten Justiervorrichtungen einen sehr kleinen Platzbedarf auf. Die erfindungsgemäße Justiervorrichtung kann daher in Anlagen verschiedenster Hersteller eingesetzt werden. Dies ist bei konventionellen Justiervorrichtungen nicht der Fall, da es je nach Anlagenaufbau für die Art der Verstellkomponenten von konventionellen Justiervorrichtungen Funktionsvorgaben gibt. Oft wird nach Inbetriebnahme der Gesamtanlage festgestellt, dass eine andere Art von Verstellkomponenten vorteilhafter wäre. Ein Umbau ist jedoch meist nicht mehr oder nur mit größerem Aufwand möglich.

Durch die erfindungsgemäße Justiervorrichtung ergibt sich eine bisher nicht gekannte Flexibilität für die mögliche Lage, Art und Anordnung der Antriebselemente, von der Art, Länge und Einbaulage der eingesetzten optischen Elemente und der wählbaren Verstellrichtung, ohne Umbaumaßnahmen an der Justiervorrichtung vornehmen zu müssen.

Bei einer bevorzugten Ausführungsform ist ein Gehäuse vorgesehen, in dem das optische Element, die Haltevorrichtung und die Stellringe vollständig angeordnet sind.

Die erfindungsgemäße Vorrichtung kommt bevorzugt zum Einsatz, wenn das optische Element ein Röntgenspiegel, ein Monochromator, ein Kollimator oder eine Spaltblende ist.

Um stets einen Kontakt zwischen den Stößeln und der Haltevorrichtung oder mit der Rückseite des optischen Elements zu gewährleisten, ist es vorteilhaft, wenn mindestens einer der Stößel fest mit der Haltevorrichtung oder mit der Rückseite des optischen Elements verbunden ist. Dies ist möglich, da die Stößel mit der Haltevorrichtung beziehungsweise dem optischen Element verdreht werden.

Es ist jedoch auch vorstellbar, dass mindestens einer der Stößel kraftschlüssig mit der Haltevorrichtung oder mit der Rückseite des optischen Elements verbunden ist. In jedem Fall muss sicher gestellt sein, dass eine auf die Stößel wirkende Kraft auf das optische Element übertragen wird.

Die Stößel liegen vorzugsweise kraftschlüssig oder formschlüssig an den Innenflächen der Stellringe an. Auf diese Weise ist es möglich, dass sich der Stellring unter den Stößel hinwegdrehen kann und trotzdem eine Verschiebung der Stößel aufgrund der Exzentrizität des Stellrings erfolgt.

Bei einer besonders bevorzugten Ausführungsform der erfindungsgemäßen Vorrichtung ist das optische Element in der Haltevorrichtung schwimmend gelagert. Für die Justierung von einfachen Spiegeln ist dabei eine einachsige schwimmende Lagerung der Haltevorrichtung ausreichend. Bei Spiegeln mit zwei Spiegelflächen (doppelte Spiegel) hingegen ist es vorteilhaft, eine kardanisch, zweiachsig schwimmend Lagerung zu verwenden. Eine Bewegung der Haltevorrichtung beziehungsweise des darin fixierten optischen Elements in andere als die gewünschten Richtungen wird hierdurch verhindert.

Eine einfache Ausführungsform der erfindungsgemäßen Vorrichtung sieht vor, dass das Gehäuse mindestens einen Durchbruch zum Betätigen der Stellringe aufweist. Der Stellring kann durch den Durchbruch im Gehäuse direkt per Hand verstellt werden.

Besonders bevorzugt ist eine Ausführungsform, bei der jede Verstelleinheiten ein Verstellelement umfasst.

Vorzugsweise ist das Verstellelement ein Betätigungsrad, das direkt oder über Zwischenräder kraftschlüssig oder formschlüssig mit der Außenfläche des Stellrings gekoppelt ist. Auf diese Weise kann beispielsweise ein mehrstufiges Getriebe mit Untersetzung zur genaueren Justierung des optischen Elements realisiert werden.

Eine einfache Ausführungsform der Erfindung sieht vor, dass mindestens eines der Verstellelemente ein manuell betätigbares Rändel- oder Stellrad ist.

Insbesondere bei schlecht zugänglichen Justiervorrichtungen ist es von Vorteil, wenn mindestens eines der Verstellelemente eine biegsame, von außen betätigbaren Welle oder einem Fernsteuerungsgestänge umfasst.

Besonders vorteilhaft ist es, wenn mindestens eines der Verstellelemente einen Motor umfasst, welcher jeweils den zum Verstellelement gehörenden Stellring antreibt.

Um die Stößel in Kontakt mit der Haltevorrichtung zu halten, sieht eine bevorzugte Ausführungsform der Vorrichtung mindestens ein Federelement vor, welches das optische Element oder die Haltevorrichtung gegen die Stößel und die Innenflächen der Stellringe drückt.

Die vorliegende Erfindung betrifft des Weiteren ein Verfahren zum Justieren eines optischen Elements für die Röntgenanalyse mittels einer erfindungsgemäßen Justiervorrichtung, bei dem die Stößel an den axialen Enden des optische Elements auf der Innenfläche des Stellringes im Bereich der exzentrischen Ausnehmung geführt werden, wobei aufgrund der Exzentrizität der Ausnehmung der Stellringe durch Verdrehen der Stellringe über die feste oder kraftschlüssige Verbindung der Stößel zum optischen Element oder zur Haltevorrichtung eine Kraft auf das optische Element ausgeübt wird, so dass das optische Element entsprechend der Auslenkungen der exzentrischen Innenbohrungen der Stellringe radial verschoben wird, wobei die Verstelleinheiten unabhängig voneinander betätigt werden können.

Die Betätigung der Stellringe kann manuell oder motorisch erfolgen.

Vorzugsweise erfolgt die Betätigung der Stellringe mit Hilfe einer Untersetzung, wodurch die Auflösung der Verstellung erhöht wird.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1    eine bevorzugte Ausführungsform der erfindungsgemäßen Justiervorrichtung im komplett montierten Zustand;

Fig. 2    Angriffspunkte der Verstelleinheiten der erfindungsgemäßen **Justier**vorrichtung an einem optische Element;

Fig. 3a-c    verschiedene Stellungen der Verstelleinheit der erfindungsgemäßen Justiervorrichtung;

Fig. 4    eine Ausführungsform der erfindungsgemäßen Justiervorrichtung mit vier Verstelleinheiten;

Fig. 5    Verstelleinheiten einer Ausführungsform der erfindungsgemäßen Justiervorrichtung mit Zahnrad-Stellringen (Montagestufe 1);

Fig. 6    Aufhängung der Haltevorrichtung der erfindungsgemäßen Justiervorrichtung (Montagestufe 2);

Fig. 7       eine Ausführungsform der erfindungsgemäßen Justiervorrichtung mit den montierten Elementen aus Fig. 4 und 5 (Montagestufe 3);

Fig. 8       einen Querschnitt durch den in Fig. 6 gezeigten Aufbau;

Fig. 9       eine Explosionsdarstellung eines Gehäuses und dazugehöriger Verstellelemente für die erfindungsgemäße Justiervorrichtung; und

Fig. 10       eine alternative Ausführungsform des Gehäuses für die erfindungsgemäße Justiervorrichtung mit biegsamen Wellen als Verstellelemente.

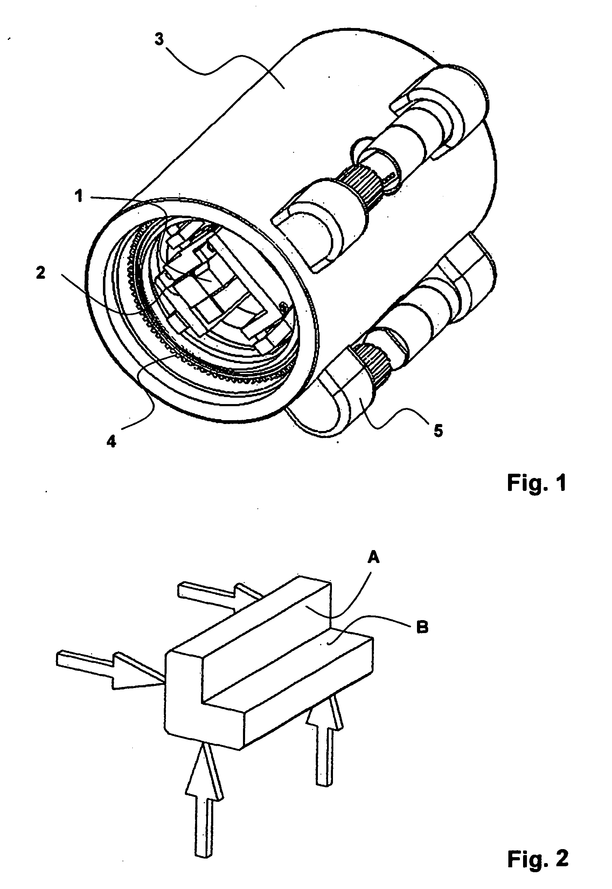

Fig. **1** zeigt eine erfindungsgemäße Justiervorrichtung zum Justieren von optischen Elementen. Das optische Element, hier ein Spiegel **1,** ist in einer Haltevorrichtung **2** fixiert, die innerhalb eines Gehäuses **3** angeordnet ist. Die Fixierung des Spiegels 1 kann beispielsweise magnetisch erfolgen. Die erfindungsgemäße Justiervorrichtung umfasst Verstelleinheiten mit jeweils einem drehbar gelagerten Stellring **4** mit einer exzentrischen Ausnehmung sowie mit jeweils einem Verstellelement **5.**

Die erfindungsgemäße Justiervorrichtung findet bevorzugt Verwendung zum Justieren von Röntgenspiegeln. Es wird zwischen zwei Arten von Röntgenspiegeln unterschieden: Spiegel mit einer Reflexionsfläche und Spiegelkombinationen mit zwei Reflexionsflächen. Die Reflexionsflächen selber können unterschiedlichste Oberflächenformen haben, abhängig von der Art ihrer Aufgabe. Die Oberfläche kann eindimensional konkav, konvex oder planar sein oder einer komplexen mathematischen Funktion folgen, zum Beispiel einer Parabel- oder Ellipsenfunktion. Zusätzlich kann eine Verformung in der zweiten Dimension erfolgen, sodass die reflektierende Fläche zum Beispiel einer paraboloiden Rinne entspricht.

Zum Justieren von "einfachen" Spiegel, also Spiegel mit nur einer Reflexionsfläche, mit Hilfe der erfindungsgemäßen Justiervorrichtung werden in der Regel nur zwei Verstelleinheiten benötigt, da einfache Spiegel nur in eine Richtung lateral verschoben und entlang der Strahlenachse zum Einstellen der Reflexion justiert werden müssen.

"Doppelte" Spiegel bestehen aus zwei einfachen Spiegeln, die unter 90° zueinander fixiert sind, mit jeweils einer Spiegelfläche **A** und **B,** wie in **Fig. 2** gezeigt. Sie werden als Einheit hergestellt und eingebaut. Bei doppelten Spiegeln sind vier Freiheitsgrade einstellbar. Entsprechend sind bei der erfindungsgemäßen Justiervorrichtung dafür vier Verstelleinheiten sinnvoll.

Herkömmliche Verstellmechaniken sind in der Regel lediglich für eine Art von Spiegeln oder für einen bestimmten Anwendungsfall ausgelegt und entwickelt. Ändern sich die Anforderungen, werden die Konstruktionen der Verstellmechaniken geändert oder neue Geräte entwickelt.

Für die erfindungsgemäße Justiervorrichtung ist die Art der Spiegel unerheblich. Alle beschriebenen Arten können direkt verwendet werden. Die Aufbauten unterscheiden sich lediglich in Form und geometrischen Abmessungen der Haltevorrichtung 2, sowie in der Anzahl der Verstelleinheiten.

Neben einfachen und doppelten Spiegeln kann die erfindungsgemäße Justiervorrichtung in der Röntgenanalyse auch mit anderen optische Elementen, wie z.B. Multilayer-, Göbel-Spiegeln®, Monochromatoren, Kollimatoren, Spaltblenden u.s.w., also Elementen, die im Strahlengang feinfühlig eingestellt und verschoben werden müssen, verwendet werden. Alle diese Komponenten können in der erfindungsgemäßen Justiervorrichtung eingebaut werden.

Auch die Länge der zu justierenden optischen Elemente ist bei der erfindungsgemäßen Justiervorrichtung unerheblich. Optische Elemente werden in abgestuften Längen hergestellt. Standardlängen für Röntgenspiegel sind beispielsweise 60mm, 80mm, 100mm, 120mm und 150mm. Spiegellängen von 200mm und darüber sind machbar. Alle Größen können bei der erfindungsgemäßen Justiervorrichtung verwendet werden. Die Aufbauten unterscheiden sich lediglich in der Gesamtlänge der Gehäuse 3 und der Haltevorrichtung 2. Da die Verstell elemente 5 standardmäßig nahe den vorderen und hinteren Enden der optischen Elemente platziert sind (siehe Fig. 1), wird weiterhin die maßliche Position der Verstellelemente 5 am Gehäuse festgelegt. In der Praxis bedeutet das, dass sich bei sonst gleichen Vorgaben die Fertigungsunterlagen für jede Länge der optischen Elemente nur in zwei Maßen, die der Gehäuselänge und die Länge der Haltevorrichtung 2, voneinander unterscheiden.

Bei dem in den gezeigten Ausführungsbeispielen dargestellten optischen Element handelt es sich um einen "doppelten" Spiegel 1 vom Typ "Montel" gemäß US 6,041,099 . Beide Spiegelflächen A und B müssen unabhängig voneinander verstellt werden, nämlich zum einen in ihrem Winkel entlang der Röntgenstrahl-Zentralachse (Justieren des Einfall- und Ausgangswinkels), und zum anderen lateral parallel zur Röntgenstrahl-Zentralachse. Fig. 2 zeigt die Angriffspunkte, an die die erfindungsgemäße Justiervorrichtung angreift, um die entsprechende Justierungen vorzunehmen.

Die Verstellung des Spiegels 1 erfolgt in der erfindungsgemäßen Justiervorrichtung durch seitliches Verschieben des Spiegels 1 (d.h. mit einer senkrechten Komponente zur Längsachse des Spiegels 1) mit Hilfe des Stellrings 4. Die Verstelleinheit umfasst nahe jeder Spiegeleingangs- und Ausgangsseite einen Stößel **6**. Der Stößel 6 wird auf der Innenfläche **7** des Stellrings 4, also an der exzentrischen Innenbohrung des Stellrings 4, geführt und liegt am Stellring 4 kraftschlüssig an oder ist mittels formschlüssiger Geometrien an diesen gekoppelt. An dem Spiegel 1 oder dessen Haltevorrichtung 2 ist der Stößel 6 fest verbunden oder liegt kraftschlüssig an oder ist mittels formschlüssiger Geometrien an den Spiegel 1 oder dessen Haltevorrichtung 2 gekoppelt. Hierdurch ist die Spiegelrückseite über den Stößel 6 mit dem Stellring 4 verbunden. Der Stößel 6 drückt die Haltevorrichtung 2 von ihrer Rückseite aus in die gewünschte Position.

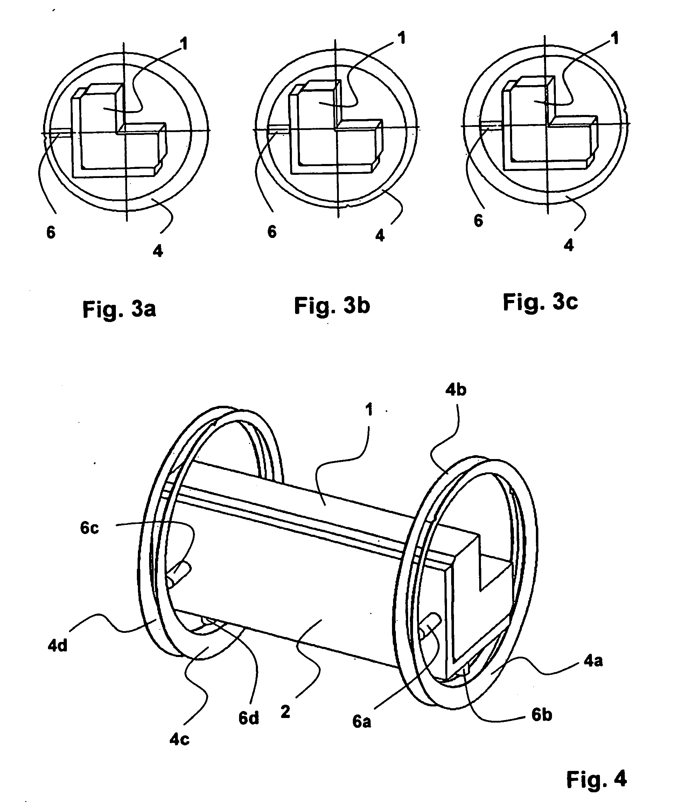

**Fig. 3a-c** zeigen das Verstellprinzip der erfindungsgemäßen Justiervorrichtung anhand verschiedener Verstellpositionen des Spiegels. Mit Hilfe des in den Fig. 3a-c eingefügten Fadenkreuzes kann man erkennen, dass der an der Innenfläche 7 des Stellrings 4 anliegende Stößel 6 bei Verdrehen des Stellrings 4 den Spiegel 1 entsprechend der Exzenterauslenkung verschiebt.

**Fig. 4** zeigt eine 3D-Darstellung der Anordnung der Verstelleinheiten zu dem zu justierenden Spiegel 1. Für jeden der in Fig. 2 gezeigten Angriffspunkte ist an den längsseitigen Enden der Haltevorrichtung 2 eine Verstelleinheit, umfassend einen Stellring **4a, 4b, 4c, 4d** mit einer exzentrischen Ausnehmung und einen Stößel **6a, 6b, 6c, 6d,** vorgesehen. Jede der Verstelleinheiten kann unabhängig von den anderen Verstelleinheiten justiert werden. Die Verstellung des Spiegels 1 wird in jeweils einer Bewegungsrichtung durch Drehen des jeweiligen exzentrischen Stellringes 4a, 4b, 4c, 4d auf seinem Außendurchmesser erreicht.

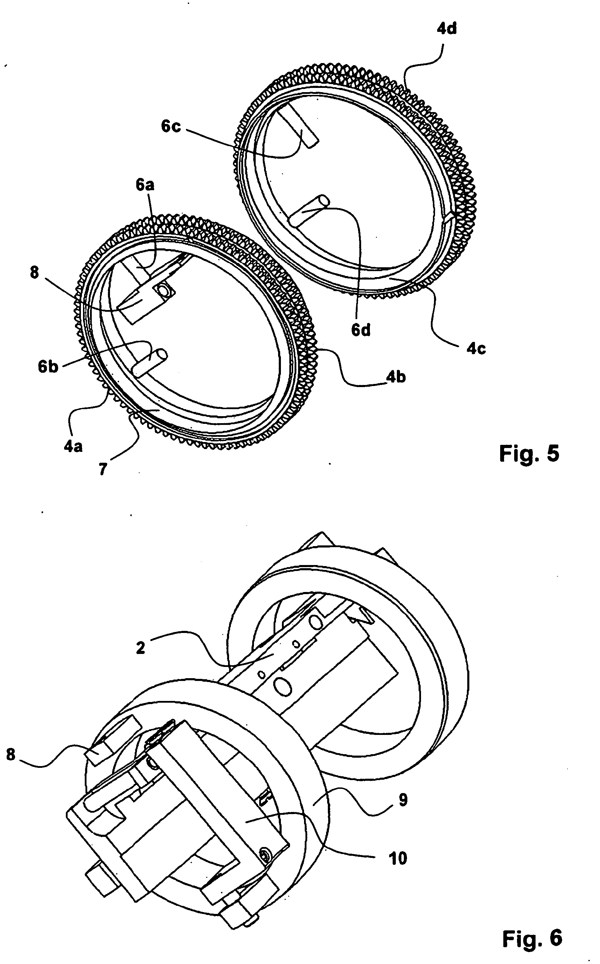

Die zum Verstellen der Stellringe 4a, 4b, 4c, 4d notwendige Verdrehkraft wird im einfachsten Fall von außen manuell aufgebracht. Diese einfache Art zur Einkoppelung der Drehbewegung bietet sich bei einer passenden Aufgabenstellung an. Jedoch ist die Auflösung hierbei für viele Anwendungen nicht ausreichend. Die Stellringe 4a, 4b, 4c, 4d der erfindungsgemäßen Justiervorrichtung werden daher vorzugsweise mit einer Standard-Verzahnung versehen, wie in **Fig. 5** gezeigt. Über Zahnräder kann dann der entsprechende Stellring 4a, 4b, 4c, 4d nach außen mit einer Antriebskomponente gekoppelt werden. Ein außen gelagertes Antriebsrad kann auch über ein Zwischenzahnrad (nicht gezeigt) auf den Verstellring wirken. Auf diese Weise kann eine Untersetzung bewirkt und die Auflösung der Drehbewegung verbessert werden

In Fig. 5 bis 9 wird der Aufbau einer kompletten Justiervorrichtung im Einzelnen gezeigt. Dargestellt sind die Funktionselemente in der Anordnung von innen nach außen; die Sicht behindernde Bauteile wurden in den einzelnen Bildern ausgeblendet.

Fig. 5 zeigt die erste Montagestufe einer bevorzugten Ausführungsform der erfindungsgemäßen Justiervorrichtung. Die Stößel 6a, 6b, 6c, 6d liegen an der Innenfläche 7 des jeweiligen Stellrings 6a, 6b, 6c, 6d kraftschlüssig an. Eine Führungseinrichtung **8** sorgt einerseits für die Führung des Stößels 6a und wird in einem Lagereinsatz **9** der Justiervorrichtung fixiert, wie in **Fig. 6** gezeigt, in der die zweite Montagestufe einer Ausführungsform der erfindungsgemäßen Justiervorrichtung dargestellt ist. Diese umfasst die Lagereinsätze 9, die Haltevorrichtung 2, sowie eine kardanische Aufhängung **10** der Haltevorrichtung 2. Die kardanische Aufhängung 10 ermöglicht ein isoliertes Justieren des optischen Elements in den einzelnen Raumrichtungen.

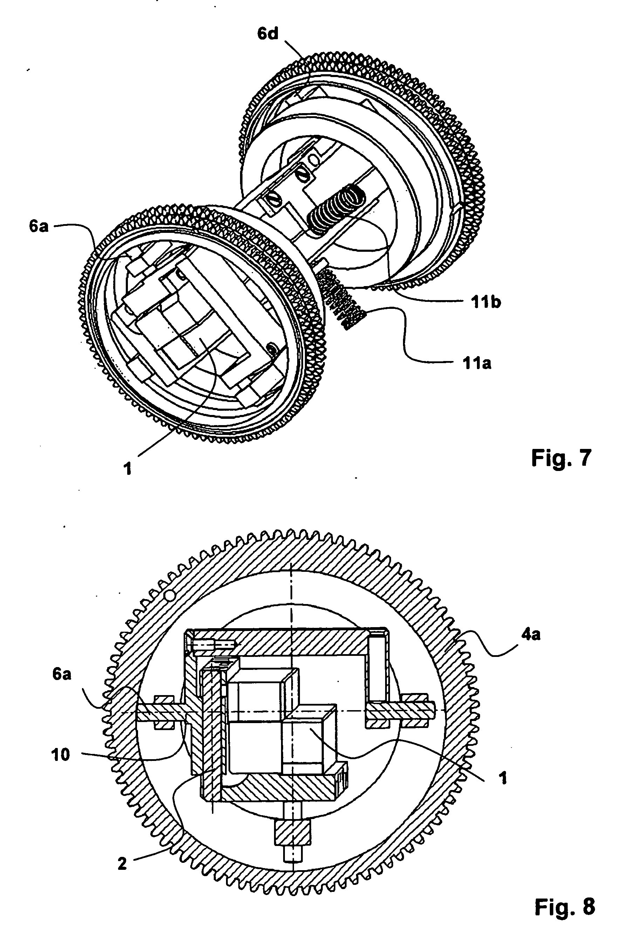

In der in **Fig. 7** gezeigten dritten Montagestufe sind die Komponenten aus Fig. 5 und 6 zusammengebaut. Entsprechend der benötigten Anzahl von Verstellungen sind die vier Stellringe 6a, 6b, 6c, 6d mit den Zahnradgetrieben hintereinander angeordnet. Der Spiegel 1 beziehungsweise dessen Haltevorrichtung 2 wird mittels Federelementen **11a, 11b** (Druckfedern) gegen die Stößel 6a, 6b, 6c, 6d gedrückt. Die Rückseite des Spiegels 1 ist daher über die Stößel 6a, 6b, 6c, 6d, welche aufgrund der von außen eingeleitete Vorspannkräfte an dem Spiegel 1 beziehungsweise dessen Haltevorrichtung 2 anliegen, mit den Innenflächen 7 der exzentrischen Stellringe 4a, 4b, 4c, 4d verbunden.

**Fig. 8** zeigt einen Querschnitt der in Fig. 7 dargestellten Montagestufe mit der kardanischen, in zwei Achsen schwimmenden Lagerung 10 (Linear- und Schwenklager) der Haltevorrichtung 2 mit dem Spiegel 1. Zu erkennen ist darüber hinaus der Stößel 6a, wie er an der Innenfläche 7 der exzentrischen Innenbohrung des Verstellringes 4a anliegt.

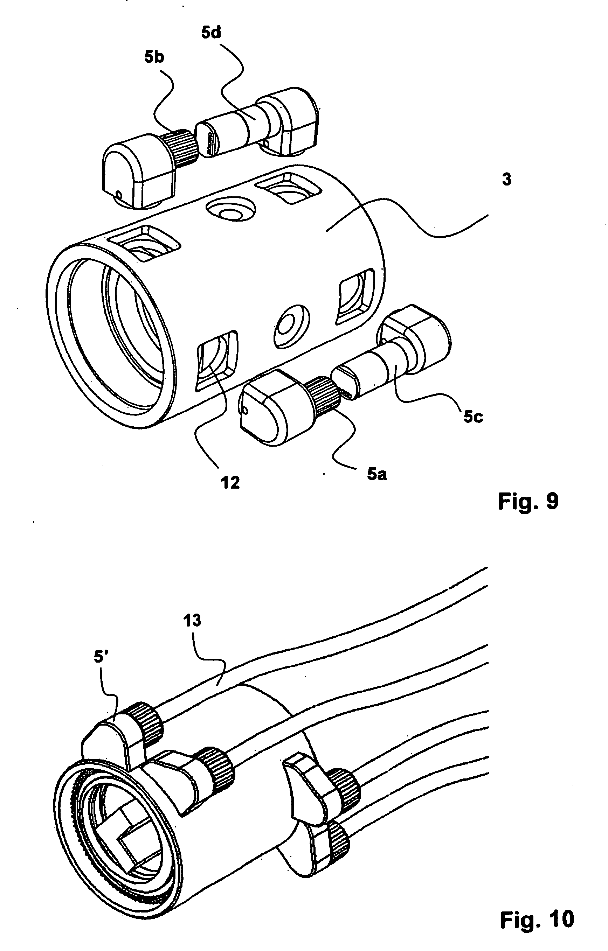

Das die eigentliche Justiervorrichtung umgebende Gehäuse 3 ist in **Fig. 9** dargestellt. Das Gehäuse 3 weist mehrere Durchbrüche **12** auf, durch die hindurch das Verdrehen der Stellringe erfolgen kann. Dazu ist für jeden Stellring ein Verstellelement 5a, 5b, 5c, 5d vorgesehen. Die Verstellelemente 5a, 5b, 5c, 5d sind in Fig. 9 als Betätigungsräder, vorzugsweise in Form von Zahnrädern, welche in die Zahnradstruktur der in Fig. 5, 7 und 8 gezeigten Verstellringe eingreifen, dargestellt. Die Kopplung zwischen den Verstellringen 4a, 4b, 4c, 4d und der außerhalb des Gehäuses 3 liegenden Betätigungsrädern ist also als Zahnradgetriebe gestaltet, z.B. in der Art eines Stirnradgetriebes. Die Verbindung zwischen dem Stellring und dem Betätigungsrad kann kraftschlüssig, z.B. als Zahnrad- oder Zahnriementrieb), oder formschlüssig, z.B. als Reibrad-, Flachriemen- oder Keilriementrieb, ausgeführt sein

Die Verstellung der Stellringe erfolgt in der in Fig. 9 gezeigten Ausführungsform über die Verstellelemente 5a, 5b manuell, wohingegen die Verstellelemente 5c, 5d motorisch, angetrieben werden.

Motorische Antriebe werden mit Schrittmotore, geregelten oder ungeregelten Gleichstrommotore oder mit Servoantrieb aufgebaut. Diese sind im Allgemeinen außerhalb des Gehäuses 3 angeordnet. Es ist jedoch auch denkbar, dass ein Motor komplett in dem Gehäuse integriert ist, wobei das Gehäuse 3 dann insgesamt größer wird (erweiterter Strahlenschutz) oder entsprechende Ausbuchtungen erhält (angesetzt oder aus einem Block hergestellt). Darüber hinaus kann ein Drehgeber oder eine Positionsabfrage vorgesehen sein. Als mechanische Verstellelemente werden Rändeloder Verstellschrauben, biegsame Wellen **13** oder Gestänge für Fernbedienung (Fig. 10) verwendet.

Um den Antrieb, beispielsweise den Motor, genügend weit vom Gehäuse platzieren zu können, umfassen die Verstellelemente in einer vorteilhaften Ausführungsform zusätzlich Zwischenräder. Im Falle eines mehrstufigen Getriebes kann darüber hinaus eine Untersetzung der Bewegung realisiert, und somit die Auflösung der Vorrichtung verbessert werden (zwischengeschaltetes Untersetzungsgetriebe).

Die meisten geläufigen Verstellungen sind lediglich auf eine der möglichen Antriebsarten ausgelegt. Umbauten von zum Beispiel mechanischer Verstellschraube auf einen Schrittmotorantrieb sind meist nur mit einigem fertigungs- oder montagetechnischen Aufwand möglich, in der Regel sind Adapter oder Umlenkungen notwendig.

Bei der erfindungsgemäßen Justiervorrichtung hingegen lassen sich entsprechend unterschiedlicher technischer Vorgaben und Anforderungen der Justage des optischen Elements die oben aufgeführten Verstellmöglichkeiten frei wählen, so dass unterschiedliche Antriebsarten innerhalb eines Aufbaus realisiert werden können. Der Umbau von zum Beispiel mechanischer Verstellschraube auf einen Schrittmotorantrieb ist jederzeit mit dem Lösen von zwei Schrauben zu erreichen. Es wird kein zusätzlicher Platz benötigt.

Der Platzbedarf der erfindungsgemäßen Justiervorrichtung ist vorteilhafterweise sehr gering, da die Verstellelemente 5a, 5b, 5c, 5d parallel zur Wirkachse der Röntgenstrahlen liegen und eng an das Gehäuse 3 angebaut sind. Der seitliche Platzbedarf ist nicht höher als beispielsweise der Durchmesser des eingesetzten Verstellrändelgriffes bei manuellem Antrieb und wird auch beim Wechsel auf eine motorische Antriebsart nicht höher. Der geringe Drehmomentbedarf der Verstellelemente erlaubt Standard-Mikromotoren mit ausreichend geringen Abmessungen.

Auch die Richtung, in die die einzelnen Verstellantriebe zeigen, kann an jedem Verstellpunkt für sich gewählt werden. Dies ist zum Beispiel bei der Fernbetätigung mit Hilfe von Biegsamen Wellen sinnvoll. Bei kurzen Spiegeln, beziehungsweise kurzen Gehäusen, müssen die Verstellelemente 5a, 5b, 5c, 5d mit den Antrieben eventuell zueinander versetzt angeordnet werden.

Die erfindungsgemäße Justiervorrichtung kann in Anlagen verschiedenster Hersteller eingesetzt werden. Je nach Gesamtaufbau der Anlage sind die Platzverhältnisse sehr unterschiedlich. In der Regel ist der vorhandene Einbauplatz beschränkt. Die Justiervorrichtung und insbesondere die Verstellelemente bei manuellem Justieren sind in einem vom Gesamtaufbau festgelegten, oft nur engen Bereichen zugänglich. Konstruktionsbedingt wird die Lage der Verstellelemente bei den aus dem Stand der Technik bekannten Verstellungen mit dem späteren Einbau in eine bestimmte Gesamtanlage abgestimmt und beim Entwurf festgelegt. Ein Verlegen der Verstellelemente ist mit einer umfangreichen Neukonstruktion verbunden.

Bei der erfindungsgemäßen Justiervorrichtung kann die Lage der Verstellelemente 5a, 5b, 5c, 5d hingegen frei gewählt werden. Sie ist nur dadurch beschränkt, dass die einzelnen Verstellelemente 5a, 5b, 5c, 5d der Justiervorrichtung aneinander vorbei passen müssen. Die Lage der Durchbrüche 12 im Spiegelgehäuse 3 für die Verstellelemente 5a, 5b, 5c, 5d wird als Winkelbemaßung in die Fertigungszeichnung eingetragen und ist im vollen Bereich von 0° bis 360° auf dem Außenumfang des Spiegelgehäuses 3 frei wählbar.

Auch nach der Fertigstellung und Montage kann die Lage der Verstellelemente 5a, 5b, 5c, 5d als Gruppe noch weitgehend frei geändert werden. Da das Spiegelgehäuse 3 als Zylinder ausgeformt ist, reicht ein Verdrehen des Gehäuses 3 in dessen Befestigung in den gewünschten Winkel. Zusätzlich muss das eingebaute optische Element mit seiner Haltevorrichtung 2 im Gehäuse 3 nach dem Drehen des Gehäuses 3 wieder in seine Soll-Position zurückgedreht und festgeschraubt werden, was bei dem erfindungsgemäßen Aufbau problemlos möglich ist. Standardmäßig sind Gewinde für die Befestigungsschrauben in 45°-Abständen vorhanden, bei Zwischenpositionen können zusätzliche Gewinde nachgebohrt werden

Ein weiterer Punkt, in dem die erfindungsgemäße Justiervorrichtung gegenüber dem Stand der Technik heraus sticht, ist die Flexibilität bezüglich der Einbauwinkel des optischen Elements.

In herkömmlichen Spiegelverstellmechaniken ist der Spiegel in seiner Winkellage fest vorgegeben. Die Spiegelverstellmechanik wird komplett, also mit Gehäuse, Verstellelementen und allen Nebenteilen, gedreht, bis sich der Spiegel in der gewünschten Winkellage befindet. Wenn sich die Aufgabenstellung ändert oder die Spiegelverstellmechanik für nicht nur einen Anwendungsfall, sondern auch für abweichende Aufgabenstellungen eingesetzt werden soll, muss die gesamte Spiegelverstellmechanik in die neue Winkellage gedreht werden. Die Verstellelemente zeigen nun nicht mehr in die optimale Richtung, die je nach konstruktiver Lösung auf gute Bedienbarkeit oder auf den vorhandenen Einbauplatz ausgerichtet war.

In der erfindungsgemäßen Justiervorrichtung kann die Einbaulage des optischen Elements völlig frei festgelegt werden. Das optische Element, bzw. dessen Haltevorrichtung 2 wird im Gehäuse 3 wie ein Kolben in einen Zylinder geschoben und kann dort in jedem Winkel zwischen 0° und 360°, vorzugsweise waagrecht, senkrecht und unter 45°, gedreht und befestigt werden. Die innere Lage des optischen Elements ist unabhängig von der Lage der Verstellelemente 5a, 5b, 5c, 5d, die bei jeder Änderung, auch bei nachträglicher Änderung, unberührt in ihrer bisherigen Position bleiben können.

Um dies zu ermöglichen, ist das optische Element, bzw. dessen kardanische Aufhängung 10 im Gehäuse 3 mit vier Schrauben befestigt. Zum Verdrehen des optischen Elements werden die Befestigungsschrauben im Gehäuse gelöst, das optische Element in die neue Stellung gedreht und die Schrauben in die entsprechenden Gewinde gedreht.

Auch hinsichtlich des Verstellbereichs und der Auflösung der Justiervorrichtung erweist sich die erfindungsgemäße Justiervorrichtung als vorteilhaft:

Bei bekannten Spiegelverstellmechaniken wird der mögliche Verstellbereich in erster Linie bestimmt durch den realisierbaren Hub der Verstellelemente. Der mögliche Einbauraum tritt als den Verstellbereich begrenzender Faktor in den Hintergrund, da Spiegelverstellungen nur geringe Hübe benötigen. In der Praxis reichen Winkelverstellbereiche von $\pm 0{,}5°$ bis $\pm 1{,}0°$ aus; sie dienen hauptsächlich zum Ausgleich von Fertigungs- und Montagetoleranzen, im geringen Maße zum Justieren der Röntgenstrahlen auf die Probe, bzw. den Detektor. Der laterale Verstellbereich beträgt $\pm 1{,}5$ mm; er dient zum Ausgleich von Einbautoleranzen der Strahlenquelle in der Röntgenröhre und zum Ausrichten der Röntgenstrahlen auf die Probe, bzw. den Detektor.

Die geforderte Auflösung der Verstellbewegungen ist von der Art der eingesetzten Spiegel und von der Messaufgabe abhängig. In den derzeitig relevanten Anwendungsfällen wird eine Auflösung der Verstellbewegung von besser als $0{,}02°$ verlangt.

In den bisher verwendeten Justiervorrichtungen kann der Hub relativ frei festgelegt werden, er ist begrenzt durch räumliche Einschränkungen und Stabilitätsbedingungen. Innerhalb dieser Begrenzungen werden die geforderten Hubbereiche der Verstellung sicher beherrscht. Die mögliche Auflösung bei den bisher verwendeten Justiervorrichtungen mit manueller Betätigung wird jedoch bestimmt durch die Steigung der Verstellspindel und dem Durchmesser des Verstellschraubengriffes. Technisch sinnvoll Gewindesteigungen bis 0,35 mm und eine Unterteilung der Drehbewegung einer Hand in 50 Schritte bei einem Durchmesser des Verstellrändelgriffes von 15 mm erlauben eine Auflösung einer Spiegelverstellung von ca. $0{,}01°$.

In der erfindungsgemäßen Justiervorrichtung wird der mögliche laterale Verstellweg ausschließlich bestimmt von der Exzentrizität der Innenbohrung des Verstellringes. Der Winkelverstellbereich wird bestimmt von der Exzentrizität der Innenbohrung des Verstellringes, sowie vom Abstand der beiden miteinander wirkenden Verstelleinheiten. Die mögliche Auflösung bei manueller Betätigung wird bestimmt von der Exzentrizität der Innenbohrung des Verstellringes, vom Abstand der beiden miteinander wirkenden Verstelleinheiten, einer eventuellen Untersetzung der Drehbewegung des Verstellringes zum Verstellrändelgriff, sowie dem Durchmesser des Verstellrändelgriffes. Bei motorischem Antrieb wird der Parameter "Durchmesser des Verstellrändelgriffes" ersetzt durch Untersetzungsgetriebe zwischen Motor und Einkopplung.

In einem praktischen Aufbau wurden folgende Parameter verwendet:

- Exzentrizität der Innenbohrung des Verstellringes: $\pm$ 1,5 mm
- Abstand der beiden miteinander wirkenden Verstelleinheiten: 90 mm
- Untersetzung der Drehbewegung des Verstellringes zum Rändelgriff: 5:1
- Durchmesser des Verstellrändelgriffes: 14 mm

Dies ergab einen Verstellbereich von $\pm$ 0,95° bei einer Auflösung von 0,004° und besser. Da der Verstellweg einer Sinuslinie entspricht, wird die reale Auflösung zu den beiden Umkehrpunkten hin immer feiner.

Die Vorgabewerte für Verstellweg und Auflösung können durch Wahl der Parameter "Exzentrizität der Innenbohrung des Verstellringes" und "Abstand der beiden miteinander wirkenden Verstelleinheiten" in weiten Bereichen frei gewählt werden. Dabei ist zu beachten, dass sich die Variablen für Verstellweg und Auflösung umgekehrt proportional zueinander verhalten. In der Praxis wird die Exzentrizität $\pm$ 3 mm nicht überschreiten und der Abstand der beiden miteinander wirkenden Verstellmechaniken nicht über die Länge des optischen Elements hinausgehen.

Aufgrund der neuartigen Konstruktion der erfindungsgemäßen Justiervorrichtung ist eine bisher nicht realisierbare Vielfältigkeit der Ausführungen und Anpassung an anlagenbedingte Vorgaben und Einschränkungen bei geringsten, zum Teil auch ohne Anpassmaßnahmen an der Justiervorrichtung möglich. Hierdurch ergeben sich die im Folgenden zusammengefassten Vorteile:

- sehr geringer Platzbedarf der Verstellelemente

- Anbau unterschiedlichster Antriebssysteme ohne Eingriff in den Aufbau

- Anbau unterschiedlichster Antriebssysteme ohne zusätzlichen Platzbedarf

- weitgehend freie Wahl der Winkellage der Antriebssysteme auf der zylindrischen Gehäuseoberfläche

- weitgehend freie Wahl der Art der optische Elemente, Einfache oder Doppelte Spiegel, Oberflächenausführung von Spiegeln, Multilayer, Göbel-Spiegeln®, Monochromatoren, Kollimatoren, Spaltblenden

- weitgehend freie Wahl der Länge der optische Elemente bei gleichem Aufbau

- freie Wahl der Lage der optische Elemente im Gehäuse, auch nachträglich jederzeit änderbar

- Verstellbereich und Auflösung der Verstellung an unterschiedliche Vorgaben anpassbar

**Bezugszeichenliste**

| | |
|---|---|
| 1 | Spiegel |
| 2 | Haltevorrichtung |
| 3 | Gehäuse |
| 4, 4a, 4b, 4c, 4d | Stellring |
| 5, 5a, 5b, 5c, 5d | Verstellelement |
| 6, 6a, 6b, 6c, 6d | Stößel |
| 7 | Innenfläche |
| 8 | Führungseinrichtung |
| 9 | Lagereinsatz |
| 10 | kardanische Aufhängung |
| 11 a, 11 b | Federelement |
| 12 | Durchbruch |
| 13 | biegsame Welle |
| A | erste Spiegelfläche |
| B | zweite Spiegelfläche |

**Patentansprüche**

1. Vorrichtung zum Justieren von röntgen-optischen Elementen für die Röntgenanalyse mit einer Haltevorrichtung (2) zur Aufnahme des optischen Elements und mit mindestens zwei entlang einer Achse angeordneten Verstelleinheiten, wobei die Verstelleinheiten je einen Stößel (6, 6a, 6b, 6c, 6d) umfassen, **dadurch gekennzeichnet, dass** jede Verstelleinheit einen drehbar gelagerten Stellring (4, 4a, 4b, 4c, 4d) mit einer exzentrischen Ausnehmung umfasst, und dass das optische Element über die Stößel (6, 6a, 6b, 6c, 6d) mit den Innenflächen (7) der Stellringe (4, 4a, 4b, 4c, 4d) mechanisch gekoppelt ist, wobei die Stößel (6, 6a, 6b, 6c, 6d) an den axialen Enden des optischen Elements auf der Innenfläche (7) des Stellringes (4, 4a, 4b, 4c, 4d) im Bereich der exzentrischen Ausnehmung geführt werden, so daß sich der Stellring unter den Stößeln hinwegdrehen kann, wobei aufgrund der Exzentrizität der Ausnehmung der Stellringe (4, 4a, 4b, 4c, 4d) durch Verdrehen der Stellringe (4, 4a, 4b, 4c, 4d) über die feste oder kraftschlüssige Verbindung der Stößel (6, 6a, 6b, 6c, 6d) zum optischen Element oder zur Haltevorrichtung (2) eine Kraft auf das optische Element ausgeübt wird, so dass das optische Element entsprechend der Auslenkungen der exzentrischen Innenbohrungen der Stellringe (4, 4a, 4b, 4c, 4d) radial verschoben wird, wobei die Verstelleinheiten unabhängig voneinander betätigt werden können.

2. Vorrichtung nach Anspruch 1, **dadurch gekennzeichnet, dass** das optische Element ein Röntgenspiegel (1), ein Monochromator, ein Kollimator oder eine Spaltblende ist.

3. Vorrichtung nach einem der vorhergehenden Ansprüche, **dadurch gekennzeichnet, dass** mindestens einer der Stößel (6, 6a, 6b, 6c, 6d) fest mit der Haltevorrichtung (2) oder mit der Rückseite des optischen Elements verbunden ist.

4. Vorrichtung nach einem der vorhergehenden Ansprüche, **dadurch gekennzeichnet, dass** mindestens einer der Stößel (6, 6a, 6b, 6c, 6d) kraftschlüssig mit der Haltevorrichtung (2) oder mit der Rückseite des optischen Elements verbunden ist.

5. Vorrichtung nach einem der vorhergehenden Ansprüche, **dadurch gekennzeichnet, dass** die Stößel (6, 6a, 6b, 6c, 6d) kraftschlüssig oder formschlüssig an den Innenflächen (7) der Stellringe (4, 4a, 4b, 4c, 4d) anliegen.

6. Vorrichtung nach einem der vorhergehenden Ansprüche, **dadurch gekennzeichnet, dass** das optische Element in der Haltevorrichtung (2) schwimmend gelagert aufgehängt ist.

7. Vorrichtung nach einem der vorhergehenden Ansprüche, **dadurch gekennzeichnet, dass** ein Gehäuse (3) vorgesehen ist, in dem das optische Element, die Haltevorrichtung (2) und die Stellringe (4, 4a, 4b, 4c, 4d) vollständig angeordnet sind, und dass das Gehäuse (3) mindestens einen Durchbruch (12) zum Betätigen der Stellringe (4, 4a, 4b, 4c, 4d) aufweist.

8. Vorrichtung nach einem der vorhergehenden Ansprüche, **dadurch gekennzeichnet, dass** jede Verstelleinheiten ein Verstellelement (5, 5', 5a, 5b, 5c, 5d), umfasst.

9. Vorrichtung nach Anspruch 8, **dadurch gekennzeichnet, dass** das Verstellelement (5, 5', 5a, 5b, 5c, 5d) ein Betätigungsrad ist, das direkt oder über Zwischenräder kraftschlüssig oder formschlüssig mit der Außenfläche des Stellrings gekoppelt ist.

10. Vorrichtung nach einem der Ansprüche 8 oder 9, **dadurch gekennzeichnet, dass** mindestens eines der Verstellelemente (5') eine biegsame, von außen betätigbare Welle (13) oder ein Fernsteuerungsgestänge umfasst.

11. Vorrichtung nach einem der vorhergehenden Ansprüche, **dadurch gekennzeichnet, dass** mindestens ein Federelement (11a, 11b) vorgesehen ist, welches das optische Element oder die Haltevorrichtung (2) gegen die Stößel (6, 6a, 6b, 6c, 6d) und die Innenflächen (7) der Stellringe (4, 4a, 4b, 4c, 4d) drückt.

12. Verfahren zum Justieren eines röntgen-optischen Elements für die Röntgenanalyse mittels einer Vorrichtung nach einem der vorhergehenden Ansprüche,
**dadurch gekennzeichnet,**
**dass** die Stößel (6, 6a, 6b, 6c, 6d) an den axialen Enden des optischen Elements auf der Innenfläche (7) des Stellringes (4, 4a, 4b, 4c, 4d) im Bereich der exzentrischen Ausnehmung geführt werden, wobei aufgrund der Exzentrizität der Ausnehmung der Stellringe (4, 4a, 4b, 4c, 4d) durch Verdrehen der Stellringe (4, 4a, 4b, 4c, 4d) über die feste oder kraftschlüssige Verbindung der Stößel (6, 6a, 6b, 6c, 6d) zum optischen Element oder zur Haltevorrichtung (2) eine Kraft auf das optische Element ausgeübt wird, so dass das optische Element entsprechend der Auslenkungen der exzentrischen Innenbohrungen der Stellringe (4, 4a, 4b, 4c, 4d) radial verschoben wird, wobei die Verstelleinheiten unabhängig voneinander betätigt werden können.

**Claims**

1. Device for adjusting X-ray optical elements, for X-ray analysis, comprising a holding device (2) for receiving the optical element and at least two adjusting units arranged along an axis, wherein the adjusting units each comprise one plunger (6, 6a, 6b, 6c, 6d),
**characterized in that**
each adjusting unit comprises a rotatably disposed adjusting ring (4, 4a, 4b, 4c, 4d) with an eccentric recess, and that the optical element is mechanically coupled to the inner surfaces (7) of the adjusting rings (4, 4a, 4b, 4c, 4d) via the plungers (6, 6a, 6b, 6c, 6d), with the plungers 6, 6a, 6b, 6c, 6d being guided at the axial ends of the optical element on the inner surface (7) of the adjusting ring (4, 4a, 4b, 4c, 4d) in the area of the eccentric recess such that the adjusting ring may rotate below the plungers, wherein, due to the eccentricity of the recess of the adjusting rings (4, 4a, 4b, 4c, 4d), a force is exerted onto the optical element through rotating the adjusting rings (4, 4a, 4b, 4c, 4d) via the fixed or non-positive connection between the plungers (6, 6a, 6b, 6c, 6d) and the optical element or the holding device (2), such that the optical element is radially shifted in correspondence with the deflections of the eccentric inner bores of the adjusting rings (4, 4a, 4b, 4c, 4d) wherein the adjusting units can be operated independently of each other.

2. Device according to claim 1, **characterized in that** the optical element is an X-ray mirror (1), a monochromator, a collimator or an aperture slot.

3. Device according to any one of the preceding claims, **characterized in that** at least one of the plungers (6, 6a, 6b, 6c, 6d) is rigidly connected to the holding device (2) or to the rear side of the optical element.

4. Device according to any one of the preceding claims, **characterized in that** at least one of the plungers (6, 6a, 6b, 6c, 6d) is non-positively connected to the holding device (2) or the rear side of the optical element.

5. Device according to any one of the preceding claims, **characterized in that** the plungers (6, 6a, 6b, 6c, 6d) non-positively or positively abut the inner surfaces (7) of the adjusting rings (4, 4a, 4b, 4c, 4d).

6. Device according to any one of the preceding claims, **characterized in that** the optical element is suspended in the holding device (2) in a floating fashion.

7. Device according to any one of the claims, **characterized in that** a housing (3) is provided in which the optical element, the holding device (2) and the adjusting rings (4, 4a, 4b, 4c, 4d) are completely disposed and that the housing (3) at least has one opening (12) for actuating the adjusting rings (4, 4a, 4b, 4c, 4d).

8. Device according to any one of the preceding claims, **characterized in that** each adjusting unit comprises one adjusting element (5, 5', 5a, 5b, 5c, 5d).

9. Device according to claim 8, **characterized in that** the adjusting element (5, 5', 5a, 5b, 5c, 5d) is an operating wheel, which is non-positively or positively coupled to the outer surface of the adjusting ring either directly or via intermediate wheels.

10. Device according to any one of the claims 8 or 9, **characterized in that** at least one of the adjusting elements (5') comprises a flexible shaft (13) that can be operated from the outside, or remote control rods.

11. Device according to any one of the preceding claims, **characterized in that** at least one spring element (11a, 11b) is provided which presses the optical element or the holding device (2) against the plungers (6, 6a, 6b, 6c, 6d) and the inner surfaces (7) of the adjusting rings (4, 4a, 4b, 4c, 4d).

12. Method for adjusting an X-ray optical element for X-ray analysis using a device in accordance with any one of the preceding claims,
**characterized in that**
the plungers (6, 6a, 6b, 6c, 6d) are guided at the axial ends of the optical element, on the inner surface (7) of the adjusting ring (4, 4a, 4b, 4c, 4d) in the area of the eccentric recess, wherein, due to the eccentricity of the recess of the adjusting rings (4, 4a, 4b, 4c, 4d), a force is exerted onto the optical element through rotating the adjusting rings (4, 4a, 4b, 4c, 4d) via the fixed or non-positive connection between the plungers (6, 6a, 6b, 6c, 6d) and the optical element or the holding device (2), such that the optical element is radially shifted in correspondence with the deflections of the eccentric inner bores of the adjusting rings (4, 4a, 4b, 4c, 4d) wherein the adjusting units can be operated independently of each other.

**Revendications**

1. Dispositif pour ajuster des éléments optiques à rayons X pour l'analyse aux rayons X, avec un dispositif de maintien (2) destiné à recevoir l'élément optique et
avec au moins deux unités de réglage disposées suivant un axe, les unités de réglage comprenant chacune un poussoir (6, 6a, 6b, 6c, 6d),
**caractérisé en ce**
**que** chaque unité de réglage comprend une bague de réglage (4, 4a, 4b, 4c, 4d) montée tournante avec un évidement excentrique, et
**que** l'élément optique est couplé mécaniquement par l'intermédiaire des poussoirs (6, 6a, 6b, 6c, 6d) avec les surfaces intérieures (7) des bagues de réglage (4, 4a, 4b, 4c, 4d), les poussoirs (6, 6a, 6b, 6c, 6d) étant guidés, aux extrémités axiales de l'élément optique, sur la surface intérieure (7) de la bague de réglage (4, 4a, 4b, 4c, 4d) au niveau de l'évidement excentrique de façon que la bague de réglage puisse tourner sous les poussoirs, la rotation des bagues de réglage (4, 4a, 4b, 4c, 4d) entraînant, en raison de l'excentricité de l'évidement des bagues de réglage (4, 4a, 4b, 4c, 4d), par l'intermédiaire de la liaison rigide ou par friction des poussoirs (6, 6a, 6b, 6c, 6d) avec l'élément optique ou avec le dispositif de maintien (2), l'application d'une force sur l'élément optique, de sorte que l'élément optique est décalé radialement en fonction des excursions des perçages intérieurs excentriques des bagues de réglage (4, 4a, 4b, 4c, 4d), les unités de réglage pouvant être actionnées indépendamment l'une de l'autre.

2. Dispositif selon la revendication 1, **caractérisé en ce que** l'élément optique est un miroir à rayons X (1), un monochromateur, un collimateur ou un diaphragme à fente.

**3.** Dispositif selon l'une des revendications précédentes, **caractérisé en ce qu'**au moins un des poussoirs (6, 6a, 6b, 6c, 6d) est relié de manière rigide au dispositif de maintien (2) ou à la face arrière de l'élément optique.

**4.** Dispositif selon l'une des revendications précédentes, **caractérisé en ce qu'**au moins un des poussoirs (6, 6a, 6b, 6c, 6d) est relié par friction au dispositif de maintien (2) ou à la face arrière de l'élément optique.

**5.** Dispositif selon l'une des revendications précédentes, **caractérisé en ce que** les poussoirs (6, 6a, 6b, 6c, 6d) sont appliqués par friction ou par engagement positif contre les surfaces intérieures (7) des bagues de réglage (4, 4a, 4b, 4c, 4d).

**6.** Dispositif selon l'une des revendications précédentes, **caractérisé en ce que** l'élément optique est suspendu de manière flottante dans le dispositif de maintien (2).

**7.** Dispositif selon l'une des revendications précédentes, **caractérisé en ce qu'**il est prévu un boîtier (3) dans lequel l'élément optique, le dispositif de maintien (2) et les bagues de réglage (4, 4a, 4b, 4c, 4d) sont complètement disposés, et que le boîtier (3) présente au moins une ouverture (12) pour actionner les bagues de réglage (4, 4a, 4b, 4c, 4d).

**8.** Dispositif selon l'une des revendications précédentes, **caractérisé en ce que** chaque unité de réglage comprend un élément de réglage (5, 5', 5a, 5b, 5c, 5d).

**9.** Dispositif selon la revendication 8, **caractérisé en ce que** l'élément de réglage (5, 5', 5a, 5b, 5c, 5d) est une roue de commande qui est couplée directement ou via des roues intermédiaires par friction ou par engagement positif avec la surface extérieure de la bague de réglage.

**10.** Dispositif selon l'une des revendications 8 ou 9, **caractérisé en ce qu'**au moins un des éléments de réglage (5') comprend un arbre flexible (13) pouvant être actionné de l'extérieur ou des tiges de commande à distance.

**11.** Dispositif selon l'une des revendications précédentes, **caractérisé en ce qu'**il est prévu au moins un élément élastique (11a, 11b) qui presse l'élément optique ou le dispositif de maintien (2) contre les poussoirs (6, 6a, 6b, 6c, 6d) et les surfaces intérieures (7) des bagues de réglage (4, 4a, 4b, 4c, 4d).

**12.** Procédé pour ajuster un élément optique à rayons X pour l'analyse aux rayons X au moyen d'un dispositif selon l'une des revendications précédentes,
**caractérisé en ce**
**que** les poussoirs (6, 6a, 6b, 6c, 6d) sont guidés, aux extrémités axiales de l'élément optiques, sur la surface intérieure (7) de la bague de réglage (4, 4a, 4b, 4c, 4d) au niveau de l'évidement excentrique, la rotation des bagues de réglage (4, 4a, 4b, 4c, 4d) entraînant, en raison de l'excentricité de l'évidement des bagues de réglage (4, 4a, 4b, 4c, 4d), par l'intermédiaire de la liaison rigide ou par friction des poussoirs (6, 6a, 6b, 6c, 6d) avec l'élément optique ou avec le dispositif de maintien (2), l'application d'une force sur l'élément optique, de sorte que l'élément optique est décalé radialement en fonction des excursions des perçages intérieurs excentriques des bagues de réglage (4, 4a, 4b, 4c, 4d), les unités de réglage pouvant être actionnées indépendamment l'une de l'autre.

3

1

2

4

5

**Fig. 1**

A

B

**Fig. 2**

**Fig. 3a**  **Fig. 3b**  **Fig. 3c**

**Fig. 4**

14

4d

6c

6a

8

6b

4a

7

6d

4c

4b

**Fig. 5**

2

8

9

10

**Fig. 6**

6d

6a

1

11b

11a

**Fig. 7**

6a

10

2

4a

1

**Fig. 8**

**5b**

**5d**

**3**

**12**

**5a**

**5c**

**Fig. 9**

**13**

**5'**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19833524
- US 6041099 A
- DE 4407278
- US 5303035 A
- US 5410206 A
- JP 09269455 B